# EUROPEAN PATENT APPLICATION

(11) **EP 4 570 066 A1**
(43) Date of publication of application: **18.06.2025**
(21) Application number: 24218203.8
(22) Date of filing: 06.12.2024
(51) Int. Cl.: A01K 97/10

(54) **FISHING ROD HOLDING DEVICE**

(30) Priority: 14.12.2023 BG 594923
(71) Applicant: Topalov, Sider Rumenov, 6300 Haskovo (BG); Georgiev, Petar Georgiev, 4023 Plovdiv (BG)
(72) Inventor: Topalov, Sider Rumenov, 6300 Haskovo (BG); Georgiev, Petar Georgiev, 4023 Plovdiv (BG)
(74) Representative: Pakidanska, Ivanka Slavcheva

(57) **Abstract**

The invention refers to a fishing rod holding device including a flat base (1) of polymeric material and an attachment device (4) mounted thereto. The base has two upper and two lower rectangular openings (2) and (2'). Between the upper rectangular openings there are two square holes (3). Below them and below the two lower rectangular openings there are two rectangular holes (5) and (5') for attaching a rod holder (6). Below one of the upper rectangular opening there is an elliptical hole (7). The rod holder has cone-shaped body (11) with triangular stabilisers (12) on both sides with bent upper ends (13). Below each stabiliser there is a plate (14). In the upper part of the rod holder there is a hole (8) and a divider (15) forming two sockets (16). The attachment device has two side-bent lugs (10) located in the square holes, and vertical arms (9) with inwardly bent free ends. An L-shaped rod-like element (17) is fitted to each arm.

## Description

### FIELD OF INVENTION

The invention refers to a fishing rod holding device intended for carrying and storing fishing tackle.

### BACKGROUND ART

A fishing rod holding device is known from JP 2004187537 comprising a flat base to which an attachment device for fixing to a belt is mounted. A hook for holding the fishing rod is mounted in the upper part of the base. A cone-shaped rod holder is clamped to the attachment device and to the lower part of the base. The handle of the fishing rod is to be placed in the rod holder.

The known device is not suitable for different types of fishing rods and it can be put only on the waist of the user.

### DESCRIPTION OF THE INVENTION

The objective of the invention is to provide a universal fishing rod holding device which is compatible with different types of fishing rods and can be attached to different types of clothing and to different parts of the body.

This objective is solved by creating a fishing rod holding device including a flat base on which is mounted an attachment device allowing attaching it to a belt. A cone-shaped holder meant to store the handle of a fishing rod is clamped to the lower part of the base.

According to the invention, the base is of a polymeric material resistant to impact and corrosion and there are four rectangular openings for a belt - two upper rectangular openings and two lower rectangular openings. Between the upper rectangular openings there are two square holes for the attachment device to be placed in. Below the two square holes and below the two lower rectangular openings there are two rectangular holes each for the rod holder to be attached. An elliptical hole for a hook or a loop is provided below one of the upper rectangular openings.

The rod holder is cone-shaped and has a body with triangular stabilizers mounted on both sides of the body where the upper ends of said stabilisers are bent. In the lower part of the body, on both sides there is a respective plate. An inner hole and a divider are provided in the front upper part of the rod holder. Two sockets for a rod reel are formed on both sides of the divider.

The attachment device has two sideward bent lugs which enter the square holes and two vertical arms with free ends bent inwardly for attaching to the clothing. Each vertical arm is provided with an L-shaped rod-like element for attaching to a belt.

The fishing rod holding device according to the invention allows for easy bait changes and fish unhooking, easy correction and other adjustments along the main fibre line with no need to search for a ground to place the fishing rod thereon in order to free the hands, or search for assistance from others. The attachment device allows for quick and easy attaching and releasing of the rod holder.

### DESCRIPTION OF THE ENCLOSED FIGURES

The device is illustrated by the enclosed figure where:

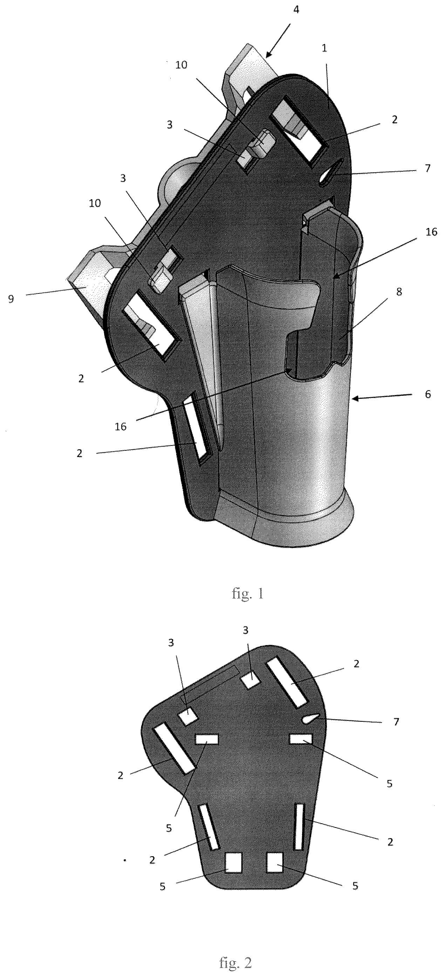

Figure 1 represents the fishing rod holding device in assembled form;
Figure 2 shows the flat base;

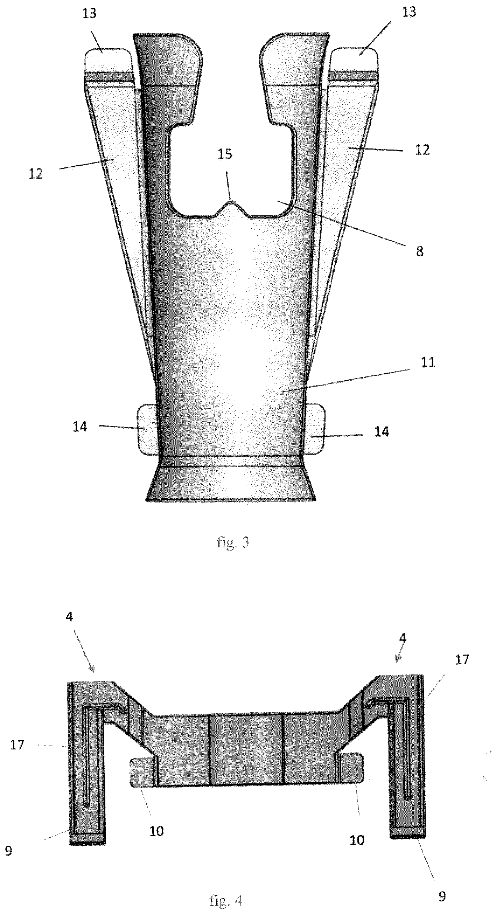

Figure 3 shows the rod holder;
Figure 4 shows the attachment device.

### PREFERRED EMBODIMENT

The enclosed figures illustrate a fishing rod holding device including a flat base 1 of polymeric material to which an attachment device 4 for fixing to a belt is mounted. There are four rectangular openings for a belt - two upper rectangular openings 2 and two lower rectangular openings 2'. Between the upper rectangular openings 2 there are two square holes 3 for the attachment device 4 to be placed in. Below the two square holes 3 and below the two lower rectangular openings 2' there are two rectangular holes 5 and 5'each for attaching the rod holder 6. An elliptical hole 7 for a hook or a loop is provided below one of the upper rectangular openings 2.

The rod holder 6 is cone-shaped and has a body 11 with triangular stabilisers 12 mounted on both sides of the body 11 where the upper ends 13 of the stabilisers 12 are bent. On both sides of the lower part of the body 11 there are plates 14. In the front upper part of the rod holder 6 are provided an inner hole 8 and a divider 15 which forms two sockets 16 for a rod reel within the body 11.

The attachment device 4 has two side-bent lugs 10 entering the square holes 3 and two vertical arms 9 with free ends bent inwardly for attaching to the user's clothing. An L-shaped rod-like element 17 for attaching to a belt is fitted to each vertical arm 9.

### APPLICATION OF THE INVENTION

Before using the fishing rod holding device is to be assembled. The rod holder 6 is mounted to the base 1, where the bent upper ends 13 of the stabilizers 12 enter the upper rectangular holes 5, and the plates 14 of the body 11 fit in the lower rectangular holes 5'. The attachment device 4 is mounted to the base 1 by means of the two side-bent lugs 10 entering the respective square holes 3. A hook or loop is inserted into the elliptical hole 7. A belt is passed through the two upper rectangular openings 2 of the base 1. The L-shaped rod-like elements 17 on the lower part of each vertical arm 9 of the attachment device 4 serve as a locking mechanism and prevent the attachment device 4, and respectively the fishing rod holding device from moving freely along the belt. Similarly, the fishing rod holding device can be secured to the leg of the user in which case a belt for legs is used, where the belt is passing through the two lower rectangular openings 2' of the flat base 1.

## Claims

1. A fishing rod holding device including a flat base with an attachment device for attaching to a belt mounted to it, and a cone-shaped rod holder clamped to the lower part of the base for the fishing rod to be placed in, **wherein** the base (1) is of polymeric material and has four rectangular openings for attaching to a belt - two upper rectangular openings (2) and two lower rectangular openings (2'), and between the upper rectangular openings (2) there are two square holes (3) for an attachment device (4) to be placed in, and below the two square holes (3) and below the two lower rectangular openings (2') there are two rectangular holes (5) and (5') each for attaching the rod holder (6), and below one of the upper rectangular openings (2) there is an elliptical hole (7) for a hook or a loop, where the rod holder (6) has a body (11) with triangular stabilisers (12) mounted on both sides, said stabilisers having bent upper ends 13, and wherein plates (14) are provided on both sides of the lower part of the body (11), and in the front upper part of the rod holder (6) there is an inner hole (8) and a divider (15) forming two sockets (16) for a rod reel within the body (11), and the attachment device (4) has two side-bent lugs (10) located in the square holes (3) and two vertical arms (9) with inwardly bent free ends for attaching to the clothing, wherein each vertical arm is provided with an L-shaped rod-like element (17) for attaching to a belt.
